# EUROPÄISCHE PATENTSCHRIFT

(11) **EP 1 820 012 B1**
(45) Veröffentlichungstag und Bekanntmachung des Hinweises auf die Patenterteilung: **07.07.2010**
(21) Anmeldenummer: 05821723.3
(22) Anmeldetag: 09.12.2005
(51) Int. Cl.: G01N 29/26, G01N 29/04, G01N 29/06

(54) **VERFAHREN ZUR ZERSTÖRUNGSFREIEN ULTRASCHALLUNTERSUCHUNG EINES PRÜFKÖRPERS DURCH SPEICHERN UND OFFLINE-AUSWERTEN DER MIT EINEM ARRAY-SENSOR ERFASSTEN ECHOSIGNALE**
METHOD FOR THE NON-DESTRUCTIVE ULTRASOUND EXAMINATION OF A TEST BODY BY STORING AND EVALUATING OFFLINE THE ULTRASOUND SIGNALS DETECTED BY AN ARRAY SENSOR
PROCEDE POUR L'EXAMEN NON DESTRUCTIF PAR ULTRASONS D'UN ECHANTILLON PAR STOCKAGE ET EVALUATION HORS LIGNE DES SIGNAUX ULTRASONORES COLLECTES PAR UN RESEAU DE CAPTEURS

(30) Priorität: 11.12.2004 DE 102004059856
(43) Veröffentlichungstag der Anmeldung: 22.08.2007
(60) Teilanmeldung: 10000753.3
(73) Patentinhaber: Fraunhofer-Gesellschaft zur Förderung der angewandten Forschung e.V., 80686 München (DE)
(72) Erfinder: KRÖNING, Michael, 66123 Saarbrücken (DE); HENTSCHEL, Dieter, 01109 Dresden (DE); VON BERNUS, Ludwig, 91575 Windsbach (DE); BULAVINOV, Andrey, 66123 Saarbrücken (DE); REDDY, Krishna Moham, 66123 Saarbrücken (DE)
(74) Vertreter: Rösler, Uwe
(86) Internationale Anmeldenummer: PCT/EP2005/013237
(87) Internationale Veröffentlichungsnummer: WO 2006/061240

(56) Entgegenhaltungen:
- US-A- 4 817 434
- US-A- 5 186 177
- US-A- 5 465 722
- US-A- 5 951 479
- US-A1- 2004 093 949
- DEUTSCH V; PLATTE M; VOGT M: "3.4.3.6 Rechnergestützte Fehlerbeschreibung" ULTRASCHALLPRUEFUNG: GRUNDLAGEN UND INDUSTRIELLE ANWENDUNGEN,, 1997, pages 133-141, XP002278716 Springer Verlag, Berlin, ISBN 3-540-62072-9

## Beschreibung

### Technisches Gebiet

Die Erfindung bezieht sich auf ein Verfahren zur zerstörungsfreien Untersuchung eines Prüfkörpers mittels Ultraschall, bei dem mit einem oder einer Vielzahl von Ultraschallwandlern Ultraschallwellen in den Prüfkörper eingekoppelt und innerhalb der Prüfkörpers reflektierte Ultraschallwellen von einer Vielzahl von Ultraschallwandlern empfangen und in Ultraschallsignale umgewandelt werden, die der zerstörungsfreien Untersuchung zugrunde liegen.

### Stand der Technik

Die Vorgehensweise bei der zerstörungsfreien Untersuchung eines Prüfkörpers mittels Ultraschall, bspw. zu Zwecken der Materialprüfung hinsichtlich Materialfehler, wie Risse, Einschlüsse oder sonstiger Materialinhomogenitäten, umfasst die Einkoppelung von Ultraschallwellen in den Prüfkörper, die Detektion der durch den Prüfkörper transmittierten oder innerhalb des Prüfkörpers reflektierten, gebeugten, gestreuten und/oder gebrochenen Ultraschallwellen sowie der Auswertung der in Ultraschallsignale umgewandelten Ultraschallwellen.

Mit der vorstehenden, an sich bekannten Untersuchungsmethode ist es möglich die Durchschallungs-, bzw. die Reflexionseigenschaften für Ultraschallwellen eines Prüfkörpers zu erfassen und auszuwerten. So bilden sich bei diesem, ursprünglich aus der Medizintechnik (Ultraschalldiagnostik) stammenden Verfahren innerhalb eines Prüfkörpers befindlich Störstellen, wie Materialrisse, materialfremde Einlagerungen oder Materialgrenzen, durch entsprechende Auswertung der empfangenen Ultraschallsignale als Bereiche mit geänderten Reflexionseigenschaften ab. Lage, Form und Größe der Störstellen können in räumlich hoch aufgelöster Weise dreidimensional zur Darstellung gebracht werden.

Es liegt auf der Hand, dass die Anwendungsgebiete dieses Verfahren vielfältig sind. Beispielhaft seien die Anwendung des Verfahrens zur Prüfung und Erfassung von Homogenitäts- oder Festigkeitseigenschaften von Bauwerksteilen (Betonwände, Decken- oder Wandelemente, etc.) oder zur Rissprüfung bspw. bei Eisenbahnrädern oder Flugzeugteilen genannt.

In vorteilhafter Weise eignen sich zur Einkoppelung sowie zum Empfang und Nachweise von Ultraschallwellen piezoelektrische Ultraschallwandler, die in der Lage sind elektrische Energie in elastische mechanische Energie umzuwandeln und umgekehrt. Piezoelektrische Ultraschallwandler zeichnen sich insbesondere durch ihr lineares Verhalten bei der Wandlung elastischer mechanischer Energie in elektrische Energie und umgekehrt aus. Zudem verfügen piezoelektrische Ultraschallwandler in Abhängigkeit von Form und Größe über eine Apertur, d.h. eine bestimmte Abstrahlcharakteristik, die das räumliche Einkoppelverhalten für Ultraschallwellen in den Prüfkörper bestimmt. Kommen eine Vielzahl einzelner Ultraschallwandler zum Einsatz, so können die Einkoppelflächen der einzelnen Ultraschallwandler auf einem Prüfkörper unmittelbar einander angrenzend zusammengesetzt werden, so dass sich eine Gesamtapertur ergibt, die sich additiv aus den Aperturen der einzelnen Ultraschallwandlern ergibt. Um bspw. Ultraschallwellen mit weitgehend gleichen Amplituden in einen Halbraumes innerhalb des Prüfkörpervolumens einzukoppeln, gilt es Ultraschallwandler mit einer möglichst kugelförmigen Abstrahlcharakteristik zu wählen. Ist hingegen die Einschallung von Ultraschalwellen in einen Prüfkörper unter einem möglichst kleinen Ausbreitungswinkel erwünscht, so gilt es Ultraschallwandler mit einer möglichst hohen ,Richtcharakteristik' zu wählen.

In vielen Anwendungsfällen der zerstörungsfreien Materialprüfung mittels Ultraschall kommt eine Vielzahl von Ultraschallwandlern zum Einsatz, die für eine bessere Handhabung in einem so genannten Ultraschallprüfkopf oder Transducer zusammengefasst werden. Grundsätzlich werden zwei Arten von Transducern unterschieden. Von einem Impuls-Echo-Prüfkopf spricht man, wenn der Transducer ein Ultraschallwellenpaket in den Prüfkörper einkoppelt und die im Prüfkörper reflektierten Ultraschallwellen wieder empfängt. Prüfköpfe mit getrennten Ultraschallwandlern zum Einkoppeln und Empfangen von Ultraschallwellen werden hingegen als Sende-Empfangs-Prüfköpfe bezeichnet.

In allen bisher bekannten Ultraschallprüfköpfen sind die einzelnen Ultraschallwandler jeweils mit einem Steuergerät verbunden, das für jeden Ultraschallwandler eine separate Steuerungselektronik, d.h. einen eigenen elektrischen Steuerungskanal, aufweist, so dass einzelnen Ultraschallwandler unabhängig voneinander angesteuert werden können und bspw. als Ultraschallsender oder -empfänger dienen. Insbesondere ermöglicht eine derartige separate Ansteuerung die einzelnen Ultraschallwandler jeweils mit unterschiedlichen Phasenlage und Amplitude zu betreiben.

Zur Durchführung einer Messung, mit der das Durchschallungsvermögen eines Prüfkörpers untersucht werden soll, regt das Steuergerät zumindest einen, meist jedoch mehrere Ultraschallwandler des Transducers für ein begrenztes, kurzes Zeitintervall zur Einkoppelung von Ultraschallwellen in den Prüfkörper an.

Die dabei entstehenden, eingekoppelten Ultraschallwellenpakete werden bspw. an Störstellen innerhalb des Prüfkörper reflektiert und gelangen als reflektierte Ultraschallwellen zu den nunmehr als Empfänger arbeitenden Ultraschallwandlern zurück, werden von diesen in Ultraschallsignale umgewandelt und an das Steuergerät zur Auswertung geleitet. Die Zeitspanne zwischen dem Aussenden und Empfangen der Ultraschallsignale wird zumeist als Messtakt bezeichnet. Nicht zuletzt aus Gründen einer verbesserten Signalermittlung und -auswertung wird eine Vielzahl derartiger Messtakte zeitlich hintereinander ausgeführt, um ein annehmbares Signal-/Rauschverhältnis zu erhalten.

In vielen Anwendungsfällen gilt es die Durchschallungs- und Reflexionseigenschaften eines Prüfkörpers möglichst räumlich fein aufgelöst innerhalb des Prüfkörpervolumens zu ermitteln. Hierzu wird eine Vielzahl von Messtakten durchgeführt, in denen die in den Prüfkörper eingekoppelten Ultraschallwellen auf einen eng begrenzten Volumenbereich, ein so genanntes Voxel, fokussiert werden.

Durch die Fokussierung der elastischen Energie der Ultraschallwellen auf einen bestimmten Volumenbereich innerhalb des Prüfkörpers, ist die aus diesem Volumenbereich reflektierte elastische Energie in Form reflektierter Ultraschallwellen bedeutend größer als bei einer nicht fokussierten Einschallung. Die Fokussierung verhilft die Messempfindlichkeit zu verbessern.

Zur Fokussierung der Ultraschallwellen in einen bestimmten Volumenbereich innerhalb des Prüfkörpers kommt das so genannte Phased-Array-Verfahren zum Einsatz. Bei diesem Verfahren werden arrayförmig an der Oberfläche des Prüfkörpers angeordnete Ultraschallwandler phasenverschoben, d.h. zeitversetzt, zur Aussendung von Ultraschallwellen angeregt. Durch entsprechende Wahl des Zeitversatzes kommt es in einem bestimmten Volumenbereich zu einer konstruktiven Überlagerung der eingekoppelten Ultraschallwellen nach dem Huygensschen Prinzip. Um eine möglichst optimale konstruktive Überlagerung der Ultraschallwellen in dem Volumenbereich zu erzielen, sind die einzelnen als Ultraschallsender arbeitenden Ultraschallwandler mit identischen Signalformen anzuregen.

Neben der Fokussierung der Ultraschallwellen auf einen bestimmten Volumenbereich innerhalb des Prüfkörpers ist es ebenso möglich durch entsprechende Wahl der Phasenverschiebung bei der Ansteuerung der arrayförmig angeordneten Ultraschallwandler eine einheitliche Einschallrichtung der Ultraschallwellen vorzugeben. Damit können beliebig schwenkbare Ultraschallfelder in einen Prüfkörper eingeschallt werden.

Die Signalauswertung beim an sich bekannten Phased-Array-Verfahren erfolgt derart, dass die einzelnen, in einem Messtakt empfangenen reflektierten Ultraschallsignale unter Berücksichtigung der bei der Einschallung zu Beginn des Messtaktes verwendeten Phasenverschiebung aufsummiert werden. Somit wird nach jedem einzelnen Messtakt ein Summensignal gebildet. Durch die Zusammenschau aller Summensignale können Aussagen über die Durchschallungs- bzw. Reflexionseigenschaften im gesamten, dem Materialprüfungsverfahren physikalisch zugänglichen Prüfkörpervolumen angestellt werden.

Nachteilhaft bei der Anwendung des Phased-Array-Verfahrens zur zerstörungsfreien Materialuntersuchung an einem Prüfkörper ist jedoch der zeitliche und messtechnische Aufwand bis ein Prüfkörper möglichst vollständig untersucht ist, gilt es doch möglichst aus allen Volumenbereichen für eine vollständige Signalauswertung hinreichend zuverlässige Messsignale zu erhalten. So lässt sich in einem Messtakt oder einer Vielzahl einzelner Messtakte mit gleicher Phasenansteuerung der Ultraschallwandler lediglich eine Information über die Reflexionseigenschaften in nur einem Volumenbereich des Prüfkörpers erhalten. Für eine Untersuchung des gesamten Prüfkörpervolumens ist daher eine sehr große Anzahl von Messungen mit jeweils unterschiedlichen Phasenansteuerungen erforderlich, was zu einem hohen Zeitaufwand für die gesamte Materialprüfung führt.

Ein weiterer Nachteil ist darin zu sehen, dass ein vorgegebener Einschallwinkel die Prüfkopfapertur festlegt, d.h. die Apertur kann nicht für alle Einschallwinkel optimal gewählt werden, was die Auflösung der Messungen verschlechtert.

Nachteilig bei dem Phased-Array-Verfahren ist zudem, dass für jeden Ultraschallwandler ein eigener Sende- und Empfangskanal mit entsprechender Ansteuerelektronik vorzusehen ist, die über separate elektrische Verbindungen mit dem jeweiligen Ultraschallwandler zu verbinden ist. Da die heute verwendeten Ultraschallprüfköpfe meist 16 oder mehr Ultraschallwandler umfassen, erfordert die Verbindung zwischen Prüfkopf und dem Steuergerät einen zumeist dicken und unflexiblen, und daher schlecht handhabbaren Kabelstrang.

Der US 2004/0093949 ist ein Ultraschalluntersuchungsverfahren zur Prüfung von Gleise zu entnehmen, um deren periphäre Querschnittsform eine Vielzahl einzelner Ultraschallwandler angebracht ist. Die Einschallung der Ultraschallwellen erfolgt unter Ausbildung sog. geführter akustischer Wellenmoden in den Schienenstrang.

Die US 5465722 beschreibt ein Verfahren, das zur Ultraschallbildaufnahme intrakorporaler Körperbereiche dient und auf einer bestimmten Auswahl von als Sender dienenden Ultraschallwandlern und hiervon getrennt auf einer weiteren Auswahl von als Empfängern dienenden Ultraschallwandlern basiert, wobei zur Erstellung eines Bildes mehrere Aufnahmeserien durchzuführen sind, mit jeweils unterschiedlichen Sendern und unterschiedlichen Empfängern.

Die Druckschrift US 5186177 offenbart einen Ultraschall-Aufnahmekopf in Katheterform, der distalseits zum Katheter zur Untersuchung durch entsprechende Gefäße intrakorporal platziert werden kann und an dessen distalen Ende ringförmig verteilt Ultraschallwandler vorgesehen sind.

In der US 5951479 wird ein Bildgebendes Ultraschallwandlersystem beschrieben, bei dem die einzelnen Ultraschallwellen vor Eintritt in den zu prüfenden Prüfkörper vorfokussiert werden und für die Signalauswertung das Prinzip der synthetischen Aperturfokussierungstechnik (SAFT) nutzt.

Aus dem Beitrag von Deutsch, Platte, Vogt, "3.4.3.6 Rechnergestützte Fehlerbeschreibung" in Ultraschallprüfung: Grundlagen und industrielle Anwendungen, 1997, S.133-141, XP002278716 Springer Verlag, Berlin, sind allgemeine Hinweise zur synthetischen Aperturfokussierungstechnik (SAFT) unter Verwendung eines dynamisch über eine Probe zu führenden Ultraschallprüfkopfes zu entnehmen.

### Darstellung der Erfindung

Die Aufgabe der vorliegenden Erfindung besteht darin, ein kostengünstiges Verfahren zur zerstörungsfreien Materialprüfung eines Prüfkörpers mittels Ultraschall anzugeben, mit dem das Volumen des Probenkörpers möglichst vollständig untersucht und dabei die räumliche Auflösung und die Empfindlichkeit der Messung gegenüber dem Stand der Technik optimiert wird. Darüber hinaus gilt es den für die Materialprüfung erforderlichen Zeitaufwand sowie den gerätetechnischen Aufwand zu reduzieren.

Die Aufgabe wird mit dem Verfahren gemäß dem Patentanspruch 1 gelöst, der ein Verfahren zur zerstörungsfreien Untersuchung eines Prüfkörpers mittels Ultraschall beschreibt, bei dem mit einem oder einer Vielzahl von Ultraschallwandlern Ultraschallwellen in den Prüfkörper eingekoppelt und innerhalb des Prüfkörpers reflektierte Ultraschallwellen von einer Vielzahl von Ultraschallwandlern empfangen und in Ultraschallsignale umgewandelt werden, die letztlich der zerstörungsfreien Untersuchung zugrunde gelegt werden.

Vorteilhafte Ausgestaltungen sind Gegenstand der Unteransprüche sowie der Beschreibung, insbesondere dem Ausführungsbeispiel zu entnehmen. Das erfindungsgemäße Verfahren zeichnet sich durch folgende Verfahrensschritte aus:

In einem ersten Schritt wird eine Anzahl von **n** großergleich 16, Ultraschallwandlern an einer Oberfläche eines Prüfkörpers angeordnet. Die Ultraschallwandler werden vorzugsweise direkt oder mittels geeigneter Koppelmittel an der Oberfläche des Prüfkörpers appliziert. Dabei werden die Ultraschallwandler geordnet in Form eines zweidimensionalen Arrays (feldförmig), d.h. in Reihen und Spalten angeordnet, an der Oberfläche des Prüfkörpers angebracht.

Die n Ultraschallwandler eignen sich vorteilhafterweise jeweils dazu Ultraschallwellen in den Prüfkörper einzukoppeln als auch Ultraschallwellen zu empfangen, d.h. sie werden sowohl als Ultraschallsender und Ultraschallempfänger eingesetzt bzw. angesteuert. Der Einsatz ausschließlicher Ultraschallsender und Ultraschallempfänger ist ebenfalls denkbar, dies führt jedoch bei gleicher räumlicher Auflösung der Messergebnisse zu einer größeren Anzahl von zu applizierenden Ultraschallwandlern.

Vorzugsweise eignen sich als Ultraschallwandler piezoelektrische Wandler, aber auch der Einsatz von Wandlern, die auf elektromagnetischen, optischen oder mechanischen Wirkprinzipien beruhen, ist möglich.

In vorteilhafter Weise sind die n Ultraschallwandler in einem zusammengefasst, der eine einfache Anwendung und Applizierung an die Prüfkörperoberfläche erlaubt. Andere Applikationen der Ultraschallwandler, bspw. an gegenüberliegenden Oberflächen des Prüfkörpers ergeben sich in Abhängigkeit von Form und Größe des Prüfkörpers sowie der jeweils gestellten Untersuchungsaufgabe. Es hat sich gezeigt, dass mit dem lösungsgemäßen Verfahren eine optimale räumliche Auflösung der Messergebnisse erzielt werden kann, wenn die Zahl der vorzusehenden Ultraschallwandler gleich oder größer als 16 gewählt wird.

In einem zweiten Schritt wird aus der Gesamtzahl der n Ultraschallwandler ein erster Ultraschallwandler oder eine erste Gruppe von Ultraschallwandlern ausgewählt, wobei im Falle der Auswahl einer Gruppe von Ultraschallwandlern die Anzahl i der der Gruppe zugehörigen Ultraschallwandler kleiner als die Gesamtzahl n aller Ultraschallwandler sein sollte.

Die Festlegung der Anzahl i der US-Sender bestimmt die pro Aktivierung der US-Sender in den Prüfkörper eingekoppelte elastische Energie, unter der Voraussetzung, dass die **i** US-Sender zeitgleich aktiviert werden. Je größer die Anzahl aller gleichzeitig aktiven Sender gewählt wird, umso höher ist die in den Prüfkörper eingekoppelte elastische Energie. Ferner erfolgt die Festlegung von **i** Ultraschallwandlern als Sender in vorteilhafter Weise derart, dass **i** unmittelbar benachbart angeordnete Ultraschallwandler, möglichst als flächig zusammenhängendes Ultraschallsenderarray ausgewählt werden. Unter der Voraussetzung, dass alle Sender zeitgleich senden, bestimmen die Anzahl **i** der US-Sender und die konkrete Zusammensetzung der Sendergruppe, insbesondere deren Anordnung auf der Prüfkörperoberfläche, zudem die Gesamtabstrahlcharakteristik (Apertur) der Sendergruppe und darüber hinaus die Empfindlichkeit und das Auflösungsvermögen der Messungen.

Im Weiteren wird der erste Ultraschallwandler, d.h. i=1, oder alle i der ersten Gruppe angehörigen Ultraschallwandler zum Aussenden von Ultraschallwellen aktiviert, die in den Prüfkörper einkoppeln. Das Aktivieren aller i einer Gruppe zugehörigen Ultraschallwandler erfolgt zeitgleich, d.h. ohne Phasenverschiebungund dass das Aktivieren allen i einer Gruppe zugehörigen Ultraschallwandler zeitgleich, d.h. ohne Phasenverschiebung erfolgt. An Störstellen innerhalb des Prüfkörpers oder an den jeweiligen Einkoppelbereichen gegenüberliegenden Prüfkörperoberflächen werden die Ultraschallwellen reflektiert und gelangen wieder zurück an den Oberflächenbereich der n auf der Prüfkörperoberfläche applizierten Ultraschallwandler, von denen alle n Ultraschallwandler die Ultraschallwellen empfangen.

Nach jedem einzelnen Messtakt werden die von allen n US-Wandiern empfangenen Ultraschallwellen in Ultraschallsignale umgewandelt und abgespeichert, d.h. einer entsprechenden Speichereinheit zugeführt und dort gespeichert.

Grundsätzlich ist es nicht erforderlich die als Sender dienenden Ultraschallwandler senderspezifisch zu modulieren, d.h. alle US-Sender werden identisch aktiviert. Aus Gründen einer möglicherweise vereinfachten oder speziellen Auswertung der Messsignale könnte es vorteilhaft sein, die empfangenen Messsignale den jeweiligen US-Sendem zuzuordnen. Hierfür werden die i einer Gruppe zugehörigen Ultraschallwandler moduliert aktiviert, d.h. jeder einzelne Ultraschallwandler wird mit einer unterscheidbaren Modulation aktiviert, so dass die in den Prüfkörper eingekoppelten Ultraschallwellen Senderspezifisch detektiert werden können.

Nach Durchführung eines oder mehrerer Messtakte erfolgt eine geänderte Auswahl von Ultraschallwellen erzeugenden US-Sender. - Aus Gründen einer besseren Messempfindlichkeit bietet es sich an mehrere Messtakte mit einer gleich bleibenden US-Senderkonstellation durchzuführen, um im Wege statistischer Signalauswertung ein verbessertes Signal-/Rauschverhältnis zu erhalten. - Im Falle jeweils eines einzigen als US-Sender dienen Ultraschallwandlers wird ein anderer Ultraschallwandler zum Aussenden von Ultraschallwellen ausgewählt. Vorzugsweise wird ein Ultraschallwandler ausgewählt, der unmittelbar benachbart zu jenem Ultraschallwandler liegt, der zuletzt aktiviert worden ist. Im Falle mehrerer, zu einer Gruppe zusammengefasster Ultraschallwandler gilt es erneut eine Gruppe von Ultraschallwandlern zu bilden, deren Anzahl i zwar identisch, jedoch deren Zusammensetzung sich von jener zuvor gewählten Zusammensetzung unterscheiden sollte, zumindest in einem Ultraschallwandler.

Auf diese Weise gelingt es den Prüfkörper aus unterschiedlichen Einkoppelbereichen mit Ultraschallwellen zu beschallen. Gleichsam dem ersten Messtakt oder dem ersten Messzyklus, der sich aus mehreren ersten Messtakten zusammensetzt, werden auch mit der neuen US-Senderkonstellation die reflektierten Ultraschallwellen mit allen n Ultraschallwandler empfangen und in Ultraschallsignale umgewandelt, die letztlich ebenfalls abgespeichert werden. Alle n für den Empfang von Ultraschallwellen dienenden Ultraschallwandler verbleiben trotz veränderter US-Senderkonstellationen unverändert, um eine möglichst einfache Messsignalauswertung nachträglich zu ermöglichen, wie dies im Weiteren noch zu entnehmen ist.

Der vorstehend beschriebenen Verfahrensschritte der wiederholten Aktivierung eines weiteren Ultraschallwandlers oder einer Gruppe von Ultraschallwandlern mit einer geänderten Zusammensetzung an Ultraschallwandlern sowie des Empfangs sowie Abspeicherung der gewonnenen Messsignale werden vorgebbar oft wiederholt, um auf diese Weise das Durchschallungs- bzw. Reflexionsvermögen des Prüfkörpers aus einer Vielzahl, vorzugsweise aus allen möglichen Einschallungspositionen zu ermitteln.

Wird bspw. lediglich ein Ultraschallwandler, d.h. i=1, als US-Wandler aktiviert, so können maximal n Messtakte oder n Messzyklen, bestehend jeweils aus einer wählbaren Anzahl von Messtakten, durchgeführt werden. Im Falle der Aktivierung einer aus i Ultraschallwandler bestehenden Gruppe können maximal alle i Permutationen aus n vorhandenen Ultraschallwandler durchgeführt werden.

Als Resultat der Durchführung der vorstehenden Verfahrensschritte wird eine Vielzahl der pro Messtakt bzw. Messzyklus abgespeicherten n Messsignale gewonnen, die es im Weiteren unter Maßgabe einer zielführenden Prüfkörperuntersuchung zu analysieren gilt. Ein besonderer Aspekt kommt der Möglichkeit der nachträglichen Auswertung der abgespeicherten Messsignale zu nach Durchführung der eigentlichen Vermessung des Prüfkörpers. Die Auswertung der Ultraschallsignale erfolgt sozusagen offline mit einem Rekonstruktionsalgorithmus, der unter Maßgabe eines virtuell vorgebbaren Einschallwinkels und/oder einer virtuellen Fokussierungen der eingekoppeltem Ultraschallwellen in den Prüfkörper ausgewählt und auf die abgespeicherten Ultraschallsignale angewendet wird. Mit Hilfe derartiger Rekonstruktionsalgorithmen können aus den gespeicherten Ultraschallsignalen synthetisch dreidimensionale Abbilder der Durchschallungs- bzw. Reflexionseigenschaften des Prüfkörpers errechnet werden, ohne, dass es zusätzlicher weitere Ultraschallmessungen bedarf. Dieses Rekonstruktionsprinzip basiert auf der Anwendung der Synthetic Apertur Focussing Technique (SAFT), die darin besteht, dass alle empfangenen Ultraschallsignale auf eine gemeinsame Zeitachse projiziert werden. Dabei können alle von einem bestimmten Reflektor reflektierten Ultraschallsignale phasengleich addiert werden. Eine nachträgliche Rekonstruktion beliebiger Einschallwinkel ergibt sich durch eine phasenversetzte Addition der Empfangssignale von verschiedenen Ultraschallempfängern. Durch die off-line Auswertung ist man in der Lage nahezu - jeden Einschallwinkel synthetisch zu rekonstruieren und damit einen Ultraschallschwenk ('Sweep') durch den Datensatz durchzuführen.

Das erfindungsgemäße Verfahren ermöglicht gegenüber dem bekannten Stand der Technik ein schnelleres, kostengünstig umsetzbares Verfahren, das eine flexible Auswertung und Bewertung der erfassten Messdaten off-line ermöglicht.

Eine vorteilhafte Weiterbildung des erfindungsgemäßen Verfahrens sieht eine Analog-Digital-Wandlung vor, bei der die analogen Ultraschallsignale der n Ultraschallempfänger in digitale Signale umgewandelt werden und in digitaler Form seriell an eine Speichereinheit weitergeleitet werden.

In einer weiteren vorteilhaften Ausgestaltung erfolgt die elektrische Ansteuerung bzw. Aktivierung aller n vorgesehener Ultraschallwandler in Form eines digitalen Datentransfers zwischen der für die Ansteuerung erforderlichen Steuereinheit und den Ultraschallwandlern. Es wird vorgeschlagen, dass in unmittelbarer Umgebung zu jedem Ultraschallwandler entsprechende AD- und DA-Konverter vorzusehen sind. Diese elektronischen Komponenten können unmittelbar an den Ultraschallwandlern oder in einem entsprechenden Ultraschallprüfkopf untergebracht werden, wodurch eine erhebliche Reduzierung der Zahl und der Stärke der bisher eingesetzten Analogverbindungskabel zwischen Prüfkopf und Steuereinheit erreicht wird. Darüber hinaus wird dadurch eine kleinere und kompaktere gerätetechnische Realisierung des Verfahrens ermöglicht.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:

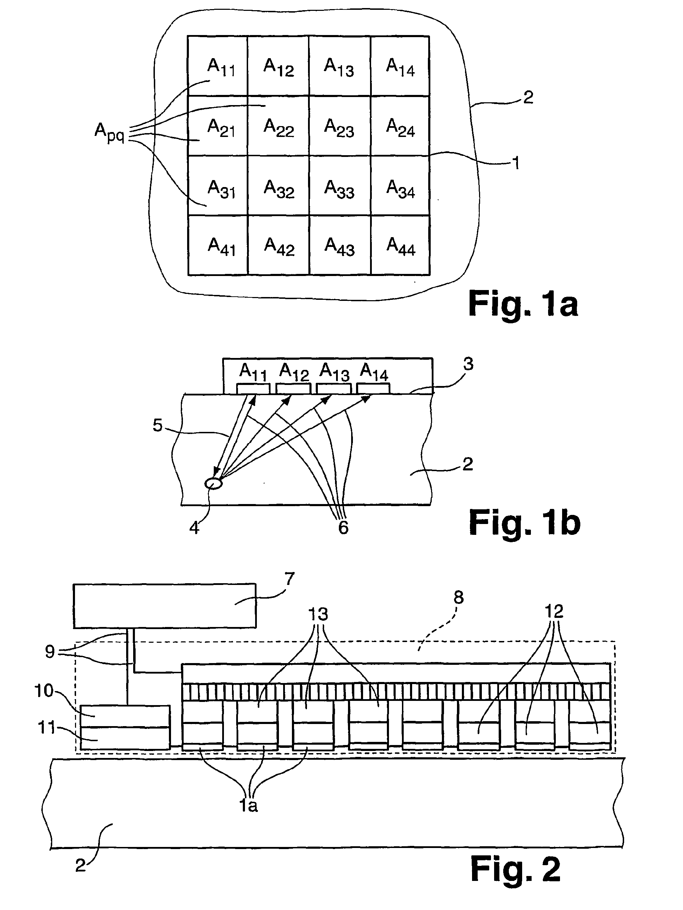

- Fig. 1a: Array von 4 x 4 Ultraschallwandlern
- Fig. 1 b: Querschnitt durch einen Prüfkörper sowie schematische Darstellung des Verfahrens für i = 1, n = m = 4
- Fig. 2: Schematischer Aufbau zur Umsetzung des erfindungsgemäßen Verfahrens

### Wege zur Ausführung der Erfindung, gewerbliche Verwendbarkeit

Die Figur 1 a zeigt eine Draufsicht auf eine schematisierte 4 x 4 Wandlerarray-Anordnung 1 mit jeweils sechzehn (n=16) Ultraschallwandler A_{pq}, wobei die Indizes p und q die Position des jeweiligen Ultraschallwandlers A_{pq} im Array 1 nach Reihe und Spalte angeben. Das Wandlerarray 1 ist an der Oberfläche eines Prüfkörpers 2 angebracht. In diesem Ausführungsbeispiel wird für alle durchzuführenden Messtakte die Anzahl i der Sender gleich eins (**i** = 1) und die Zahl m der Empfänger gleich sechzehn (m = n = 16) gewählt.

Figur 1b zeigt einen Querschnitt durch einen Prüfkörper 2, so dass die Querschnittsfläche senkrecht zur Prüfkörperoberfläche und durch die erste Reihe des auf der Oberfläche 3 angebrachten Ultraschallwandlerarrays 1 orientiert ist. An der Oberfläche 3 des Prüfkörpers 2 sind daher die vier Ultraschallwandler A₁₁, A₁₂, A₁₃, A₁₄, des Arrays 1 angeordnet. Es sei angenommen, dass innerhalb des Prüfkörpers 2 eine Störstelle 4 vorliegt.

In einem ersten Messtakt wird der Ultraschallwandler A₁₁ als Sender aktiviert. A₁₁ sendet Ultraschallwellen aus, die gemäß dem dargestellten Einschallweg 5 die Störstelle 4 treffen bzw. beleuchten, an dieser reflektiert werden und gemäß den dargestellten Reflexionswegen 6 auf alle dargestellten und nicht dargestellten Ultraschallwandler des Arrays 1 treffen und von diesen empfangen werden.

Im ersten Messtakt (k = 1) wird in jedem Ultraschallwandler A_{pq} ( p = 1,...,4 und q = 1,...,4) ein Ultraschallsignal U_{k=1,pq} erzeugt. Diese 4 x 4 = 16 Ultraschallsignale werden einzeln seriell in einer Speichereinheit gespeichert. Im nächsten Messtakt (k= 2, nicht dargestellt) koppelt der Ultraschallwandler A₁₂ Ultraschallwellen in den Prüfkörper 2 ein. Aufgrund der veränderten Einschallposition verändert sich der Einschallwinkel bzw. der "Beleuchtungswinkel" der Störstelle 4 und damit verändert sich die Reflexionsgeometrie innerhalb des Prüfkörpers 2. An allen 16 Ultraschallwandlern A_{pq} werden im zweiten Messtakt demzufolge veränderte Ultraschallsignale Uₖ₌₂,_{pq} empfangen und anschließend in der Speichereinheit gespeichert. Es sei angenommen, dass maximal 16 Messtakte durchgeführt werden, mit jeweils unterschiedlicher Senderkonstellatioh. Mit der Durchführung aller 16 Messtakte wird ein Datensatz U_{kpq} gewonnen, der 16 x 4 x 4 = 256 einzelne Ultraschallsignale umfasst.

Mit Rekonstruktionsalgorithmen können aus diesen Daten off-line alle physikalisch möglichen Fokussierungen und Einschallwinkel synthetisch nachgebildet und daraus die Durchschallungs- und Reflexionseigenschaften innerhalb der Prüfkörpers 2 ermittelt werden, ohne weitere Messungen durchführen zu müssen.

Figur 2 zeigt die gerätetechnische Umsetzung einer vorteilhaften Weiterbildung des erfindungsgemäßen Verfahrens. Dabei sind eine Steuereinheit 7 und ein Prüfkopf 8 (strichlierte Umrandung) vorgesehen, wobei die Daten- und Steuerkommunikation zwischen Steuereinheit 7 und Prüfkopf 8 über elektrische Leitungen 9 in digitaler Form erfolgt. In diesem Ausführungsbeispiel sind ein Signalgenerator 10, ein Multiplexer 11 und die für die AD/ DA Wandlung erforderliche Elektronik in dem Prüfkopf 8 untergebracht. Der Signalgenerator 10 erzeugt auf ein Triggersignal der Steuereinheit 7 einen Sendepuls, der über den Multiplexer 11 an einen oder mehrere Ultraschallwandler A_{pq} im Prüfkopf 8 geleitet wird und diesen oder diese veranlasst Ultraschallwellen in den Prüfkörper 2 einzukoppeln. Die nach Reflexion im Prüfkörper 2 von den Ultraschallwandlern A_{pq} empfangenen Ultraschallsignale werden durch jeweils pro Ultraschallwandler A_{pq} vorgesehene Vorverstärker 12 und AD Konverter 13 zunächst verstärkt und anschließend digitalisiert. Im Weiteren werden die zunächst parallel vorliegenden, digitalen Daten der einzelnen Ultraschallwandler A_{pq} in serielle Form umgewandelt, bevor sie per Datenleitung 9 an die Steuereinheit 7 zur Abspeicherung gesendet werden.

### Bezugszeichenliste

- 1: Array, Ultraschallwandlerarray
- 2: Prüfkörper
- 3: Oberfläche, Prüfkörperoberfläche
- 4: Störstelle
- 5: Einschallweg
- 6: Reflexionsweg
- 7: Steuereinheit
- 8: Prüfkopf
- 9: elektrische Leitungen
- 10: Signalgenerator
- 11: Multiplexer
- 12: Vorverstärker
- 13: AD-Wandler

## Patentansprüche

1. Verfahren zur zerstörungsfreien Untersuchung eines Prüfkörpers (2) mittels Ultraschall, bei dem mit einer Vielzahl von Ultraschallwandlern Ultraschallwellen in den Prüfkörper (2) eingekoppelt und innerhalb des Prüfkörpers (2) reflektierte Ultraschallwellen von einer Vielzahl von Ultraschallwandlern empfangen und in Ultraschallsignale umgewandelt werden, die der zerstörungsfreien Untersuchung zugrunde liegen,
wobei
a) n Ultraschallwandler an einer Oberfläche (3) des Prüfkörpers (2) angeordnet werden,
b) ein erster Ultraschallwandler oder eine erste Gruppe mit i Ultraschallwandlern aus den n Ultraschallwandlern zum Aussenden von Ultraschallwellen in den Prüfkörper, mit i < n, ausgewählt und aktiviert wird,
c) die im Inneren des Prüfkörpers (2) reflektierten Ultraschallwellen mit m Ultraschallwandlern, mit i < m ≤ n empfangen und m Ultraschallsignale generiert werden, die d) abgespeichert werden, und
e) ein anderer Ultraschallwandler oder eine andere Gruppe mit i Ultraschallwandlern, die sich wenigstens durch einen Ultraschallwandler von der ersten Gruppe unterscheidet zum Aussenden von Ultraschallwellen ausgewählt und aktiviert wird und die Verfahrensschritte c) und d) durchgeführt werden,
f) der Verfahrensschritt e) mit jeweils der Auswahl eines weiteren Ultraschallwandlers oder einer weiteren Gruppe von i Ultraschallwandlern unter der Maßgabe, dass sich der weitere Ultraschallwandler oder die weitere Gruppe mit i Ultraschallwandlern von einem bereits ausgewählten Ultraschallwandler oder von einer bereits ausgewählten Gruppe mit i Ultraschallwandlern unterscheidet, wiederholt ausgeführt wird,
wobei vorgesehen ist dass die n ≥16 Ultraschallwandler in einer zwei-dimensionalen arrayförmigen Anordnung, d.h. in Reihen und Spalten angeordnet, derart an der Oberfläche des Prüfkörpers angebracht werden, dass das Empfangen der im Inneren des Prüfkörpers reflektierten Ultraschallwellen von sämtlichen an der Oberfläche (3) des Prüfkörpers (2) vorgesehenen Ultraschallwandler, d.h. m = n erfolgt, und
dass die Ultraschallsignale mit einem Rekonstruktionsalgorithmus offline ausgewertet werden, d.h. nach Durchführung der Durchschallung des Prüfkörpers (2) mit Ultraschall, wobei der Rekonstruktionsalgorithmus unter Massgabe eines virtuell vorgebbaren Einschallwinkels der eingekoppeltem Ultraschallwellen in den Prüfkörper angewendet wird, und dass das Aktivieren allen i einer Gruppe zugehörigen Ultraschallwandler zeitgleich, d.h. ohne Phasenverschiebung erfolgt.

2. Verfahren nach Anspruch 1,
**dadurch gekennzeichnet, dass** das Aktivieren der i einer Gruppe zugehörigen Ultraschallwandler moduliert durchgeführt wird, d.h. jeder einzelne Ultraschallwandler wird mit einer unterscheidbaren Modulation aktiviert, so dass die in den Prüfkörper eingekoppelten Ultraschallwellen senderspezifisch detektiert werden.

3. Verfahren nach Anspruch 1 oder 2,
**dadurch gekennzeichnet, dass** das Auswählen der i einer Gruppe zugehörigen Ultraschallwandler derart durchgeführt wird, dass unmittelbar benachbarte Ultraschallwandler gemäß eines Flächenarrays ausgewählt werden.

4. Verfahren nach einem der Ansprüche 1 bis 3,
**dadurch gekennzeichnet, dass** Ultraschallwandler eingesetzt werden, die auf einem elektromagnetischen, optischen und/oder mechanischen Wirkprinzip beruhen, insbesondere auf dem piezoelektrischen Wandlerprinzip beruhen.

5. Verfahren nach einem der Ansprüche 1 bis 4,
**dadurch gekennzeichnet, dass** das Generieren und Abspeichern jeweils der n Ultraschallsignale im Wege einer Analog-Digital-Wandlung erfolgt, bei der die analogen Ultraschallsignale der n Ultraschallwandler in digitale Signale umgewandelt werden und in serieller Form abgespeichert werden.

## Claims

1. A method for the nondestructive examination of a test specimen (2) using ultrasound, in which ultrasonic waves are coupled into the test specimen (2) using a plurality of ultrasonic transducers and ultrasonic waves reflected within the test specimen (2) are received by a plurality of ultrasonic transducers and converted into ultrasonic signals, which are the basis of the nondestructive examination,
a) n ultrasonic transducers being situated on the surface (3) of the test specimen (2),
b) a first ultrasonic transducer or a first group having i ultrasonic transducers of the n ultrasonic transducers being selected and activated to emit ultrasonic waves into the test specimen, with i < n,
c) the ultrasonic waves reflected in the interior of the test specimen (2) being received using m ultrasonic transducers, with i <m ≤ n, and m ultrasonic signals being generated, which are
d) stored, and
e) another ultrasonic transducer or another group having i ultrasonic transducers, which differs by at least one ultrasonic transducer from the first group, being selected and activated to emit ultrasonic waves, and method steps c) and d) being performed,
f) method step e) being executed repeatedly with the selection of a further ultrasonic transducer or a further group of i ultrasonic transducers in each case, with the proviso that the further ultrasonic transducers or the further group having i ultrasonic transducers differs from an already selected ultrasonic transducer or an already selected group having i ultrasonic transducers,
it being provided that the n ≥ 16 ultrasonic transducers are attached in a two-dimensional array-type configuration, i.e., situated in rows and columns, on the surface of the test specimen in such a manner that the ultrasonic waves reflected in the interior of the test specimen are received by all ultrasonic transducers provided on the surface (3) of the test specimen (2), i.e., m = n, and
the ultrasonic signals are analyzed off-line using a reconstruction algorithm, i.e., after performance of the through transmission of the test specimen (2) using ultrasound, the reconstruction algorithm being applied with the provision of a virtual predefinable angle of incidence,
and the activation of all i ultrasonic transducers belonging to a group occurs simultaneously, i.e., without phase shift.

2. The method according to Claim 1,
**characterized in that** the activation of the i ultrasonic transducers belonging to a group is performed in a modulated manner, i.e., each individual ultrasonic transducer is activated using a differentiable modulation, so that the ultrasonic waves coupled into the test specimen are detected in a transmitter-specific manner.

3. The method according to Claim 1 or 2,
**characterized in that** the selection of the i ultrasonic transducers belonging to a group is performed in such a manner that directly adjacent ultrasonic transducers are selected according to a planar array.

4. The method according to one of Claims 1 through 3,
**characterized in that** ultrasonic transducers which are based on an electromagnetic, optical, and/or mechanical action principle, in particular are based on the piezoelectric transducer principle, are used.

5. The method according to one of Claims 1 through 4,
**characterized in that** the generation and storage of the n ultrasonic signals is performed in the course of an analog/digital conversion, during which the analog ultrasonic signals of the n ultrasonic transducers are converted into digital signals and stored in serial form.

## Revendications

1. Procédé d'examen non destructif d'un échantillon (2) aux ultrasons, dans lequel, à l'aide d'une multitude de convertisseurs d'ultrasons, des ondes ultrasons sont diffusées dans l'échantillon (2) et les ondes ultrasons réfléchies au sein de l'échantillon (2) sont reçues par une multitude de convertisseurs d'ultrasons et converties en signaux ultrasons qui sont à la base de l'examen non destructif,
dans lequel
a) n convertisseurs d'ultrasons sont disposés sur une surface (3) de l'échantillon (2),
b) un premier convertisseur d'ultrasons ou un premier groupe comprenant i convertisseurs d'ultrasons des n convertisseurs d'ultrasons est sélectionné et activé pour envoyer des ondes ultrasons dans l'échantillon, sachant que i < n,
c) les ondes ultrasons réfléchies au sein de l'échantillon (2) sont reçues par m convertisseurs d'ultrasons, sachant que i < m ≤ n, et m signaux d'ultrasons sont générés, lesquels
d) sont enregistrés et
e) un autre convertisseur d'ultrasons ou un autre groupe comprenant i convertisseurs d'ultrasons et qui se distingue au moins par un convertisseur d'ultrasons du premier groupe est sélectionné et activé pour envoyer des ondes ultrasons et les étapes c) et d) sont réalisées,
f) l'étape ou les étapes opératoires sont réalisées à répétition avec respectivement une sélection d'un autre convertisseur d'ultrasons ou d'un autre groupe de i convertisseurs d'ultrasons sous réserve que l'autre convertisseur d'ultrasons ou l'autre groupe de convertisseurs d'ultrasons comprenant i convertisseurs d'ultrasons se distingue d'un convertisseur d'ultrasons déjà sélectionné ou d'un groupe déjà sélectionné comprenant i convertisseurs d'ultrasons,
étant prévu que les n ≥ 16 convertisseurs d'ultrasons soient disposés en agencement bidimensionnel en forme de réseau, c'est-à-dire en rangées et en colonnes, sur la surface de l'échantillon de manière à ce que la réception des ondes ultrasons réfléchies au sein de l'échantillon de tous les convertisseurs d'ultrasons prévus à la surface (3) de l'échantillon (2) ait lieu, c'est-à-dire que m = n, et
que les signaux ultrasons soient exploités hors ligne à l'aide d'un algorithme de reconstruction, c'est-à-dire après réalisation de l'irradiation de l'échantillon (2) aux ultrasons,
l'algorithme de reconstruction étant utilisé sous réserve d'un angle d'irradiation virtuellement prescriptible des ondes ultrasons diffusées dans l'échantillon et
que l'activation de tous les i convertisseurs d'ultrasons appartenant à un groupe ait lieu en même temps, c'est-à-dire sans déphasage.

2. Procédé selon la revendication 1,
**caractérisé en ce que** l'activation des i convertisseurs d'ultrasons appartenant à un groupe est réalisée de manière modulée, c'est-à-dire que chacun des convertisseurs d'ultrasons est activé avec une modulation différenciable, de sorte que les ondes ultrasons diffusées dans l'échantillon sont détectées de manière spécifique à l'expéditeur.

3. Procédé selon la revendication 1 ou 2,
**caractérisé en ce que** la sélection des i convertisseurs d'ultrasons appartenant à un groupe est réalisée de manière à ce que les convertisseurs d'ultrasons directement voisins soient sélectionnés suivant un réseau surfacique.

4. Procédé selon une des revendications 1 à 3,
**caractérisé en ce qu'**on utilise des convertisseurs d'ultrasons qui sont basés sur un principe d'action électromagnétique, optique et/ou mécanique, notamment sur le principe d'un convertisseur piézoélectrique.

5. Procédé selon une des revendications 1 à 4,
**caractérisé en ce que** la génération et l'enregistrement respectif des n signaux d'ultrasons se fait par voie d'une conversion analogique/numérique lors de laquelle les signaux d'ultrasons analogiques des n convertisseurs d'ultrasons sont convertis en signaux numériques et enregistrés sous forme de série.
